(19) Europäisches Patentamt

European Patent Office

Office européen des brevets

(11) **EP 0 964 252 A1**

(12) **EUROPÄISCHE PATENTANMELDUNG**

(43) Veröffentlichungstag:
**15.12.1999 Patentblatt 1999/50**

(51) Int. Cl.$^6$: **G01P 15/12**, G01L 1/22,
G01D 3/02, G01D 3/036

(21) Anmeldenummer: **99110288.0**

(22) Anmeldetag: **27.05.1999**

(84) Benannte Vertragsstaaten:
**AT BE CH CY DE DK ES FI FR GB GR IE IT LI LU
MC NL PT SE**
Benannte Erstreckungsstaaten:
**AL LT LV MK RO SI**

(30) Priorität: **09.06.1998 DE 19825761**

(71) Anmelder:
**FRAUNHOFER-GESELLSCHAFT ZUR
FÖRDERUNG DER
ANGEWANDTEN FORSCHUNG E.V.
80636 München (DE)**

(72) Erfinder:
• **Hillerich, Bernd Dr.-Ing. Dipl.-Phys.
89075 Ulm (DE)**
• **Feil, Michael Dipl.-Phys.
81475 München (DE)**
• **Seitz, Stefan Dr.-Ing. Dipl.-Ing.
82152 Planegg (DE)**

(74) Vertreter:
**Schoppe, Fritz, Dipl.-Ing.
Schoppe, Zimmermann & Stöckeler
Patentanwälte
Postfach 71 08 67
81458 München (DE)**

(54) **Vorrichtung zum Erfassen einer Dehnung und/oder einer Stauchung eines Körpers**

(57)    Eine Vorrichtung zur Erfassung einer Dehnung und/oder einer Stauchung eines Körpers weist ein verformbares Halbleitersubstrat (102) auf, das auf dem Körper, dessen Dehnung und/oder Stauchung zu erfassen ist, aufbringbar ist. Auf dem Halbleitersubstrat (102) ist ein Element ($R_1$, $R_2$, $R_3$, $R_4$) angeordnet, das zumindest eine physikalische Eigenschaft hat, die sich abhängig von einer Dehnung und/oder Stauchung des Halbleitersubstrats (102) ändert. Ferner ist auf dem Halbleitersubstrat (102) zusammen mit dem Element eine Auswertungseinrichtung (108, 110, 112) angeordnet, die mit dem Element ($R_1$, $R_2$, $R_3$, $R_4$) verbunden ist, um ein von der Dehnung und/oder Stauchung abhängiges Meßsignal zu erzeugen.

FIG.1    100    114

EP 0 964 252 A1

## Beschreibung

Die vorliegende Erfindung bezieht sich auf eine Vorrichtung zum Erfassen einer Dehnung und/oder einer Stauchung eines Körpers, insbesondere auf Dehnungsmeßstreifen, die mit einer Widerstandsänderung auf eine Dehnung oder Stauchung reagieren, und die als Meßwandler bei Kraft- und Drehmoment-sensoren, bei Waagen, bei der Werkstoffprüfung und zur Spannungs- bzw. Dehnungsanalyse vielfältige Verwendung finden.

Die Wirkung von Dehnungsmeßstreifen (im folgenden als DMS bezeichnet) beruht auf folgendem Effekt: Wird ein elektrischer Leiter so auf einem Meßobjekt, im folgenden als Federkörper bezeichnet, angeordnet, daß er von ihm elektrisch isoliert ist, dessen Dehnung und/oder Stauchung jedoch mitmacht, so ändert sich der elektrische Widerstand R des Leiters annähernd proportional zur Dehnung $\varepsilon$. Für Dehnungen im Bereich bis ca. 0,5% der Länge des nicht gedehnten Streifens gilt für die relative Widerstandsänderung folgende Gleichung:

$$\Delta R/R = K \times \varepsilon$$

mit K = K-Faktor, auch als Dehnungsempfindlichkeit bezeichnet.

Für Konstantan, ein bei Dehnungsmeßstreifen häufig verwendetes Metall ist der K-Faktor gleich 2. Andere Metalle haben ähnliche K-Faktoren. Die nachzuweisenden relativen Widerstandsänderungen sind sehr klein, sie liegen typischerweise im Bereich von $10^{-8}$ bis $5 \times 10^{-3}$.

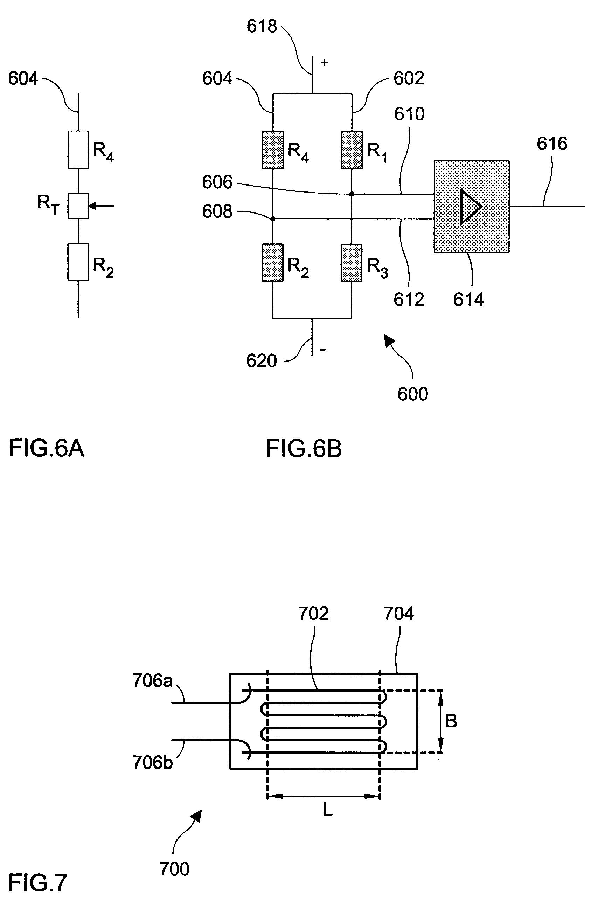

Eine aus dem Stand der Technik bekannte Brückenschaltung mit vier Dehnungsmeßstreifen und einer Temperaturkompensationsschaltung ist in Fig. 6a und in Fig. 6b dargestellt. Die in Fig. 6b dargestellte Brückenschaltung ist in ihrer Gesamtheit mit dem Bezugszeichen 600 versehen und umfaßt vier Dehnungsmeßstreifen $R_1$, $R_2$, $R_3$ und $R_4$. Die Dehnungsmeßstreifen sind in einer Brücke verschaltet, wobei die Dehnungsmeßstreifen $R_1$ und $R_3$ in einem ersten Brückenzweig 602 angeordnet sind, und die Dehnungsmeßstreifen $R_2$ und $R_4$ in einem zweiten Brückenzweig 604 angeordnet sind. Über einen Knoten 606 im ersten Brückenzweig 602, zwischen den Dehnungsmeßstreifen $R_1$ und $R_3$, und über einen zweiten Knoten 608 im zweiten Brückenzweig 604 zwischen den Dehnungsmeßstreifen $R_4$ und $R_2$ wird das Brückenausgangssignal abgegriffen und über Leitungen 610 und 612 einem Brückenverstärker 614 zugeführt, auf dessen Ausgangsleitung 616 ein Meßsignal anliegt, das eine Dehnung oder Stauchung anzeigt. Der Brückenverstärker 614 kann als Differenzverstärker ausgeführt sein, der eine Spannungsdifferenz zwischen den Knoten 606 und 608 verstärkt.

Die in Fig. 6b dargestellten Dehnungsmeß-streifen $R_1$ bis $R_4$ haben nominell den gleichen Widerstandswert.

Über einen ersten Anschluß 618 ("+") und einen zweiten Anschluß 620 ("-") wird die Brückenschaltung 600 mit der erforderlichen Brückenspannung bzw. Betriebsspannung beaufschlagt.

Zusätzlich zu den in Fig. 6b dargestellten Schaltungselementen kann die Brückenschaltung eine Temperaturkompensationsschaltung umfassen, die in Fig. 6a dargestellt ist. In Fig. 6a ist beispielhaft der zweite Brückenzweig 604 aus Fig. 6b dargestellt, welcher die Dehnungsmeßstreifen $R_2$ und $R_4$ aufweist, zwischen die ein temperaturabhängiger Widerstand $R_T$ geschaltet ist.

Verschiedene Ausführungsformen von Dehnungsmeßstreifen sind bekannt, wie sie beispielsweise von D. Juckenach, im "Handbuch für Sensortechnik - Messen mechanischer Größen", Verlag moderne Industrie, 1990 beschrieben sind.

Ein bekannter Dehnungsmeßstreifen ist der sogenannte Draht-Dehnungsmeßstreifen, der in Fig. 7 näher dargestellt ist. Der Draht-DMS 700 umfaßt einen mäanderförmig angeordneten Draht 702, der zwischen zwei isolierenden Folien 704 (in Fig. 7 ist nur eine dieser Folien dargestellt) eingebettet ist. Ferner sind zwei Anschlüsse 706a und 706b vorgesehen, die mit dem Draht 702 in Verbindung sind. Der Drahtmäander 702 hat eine Meßlänge L im Bereich von 5 bis 50 mm, und eine Breite B. Aufgrund der aufwendigen Herstellung und der eingeschränkten Miniaturisierbarkeit werden Draht-DMS heute nur noch in Ausnahmefällen verwendet.

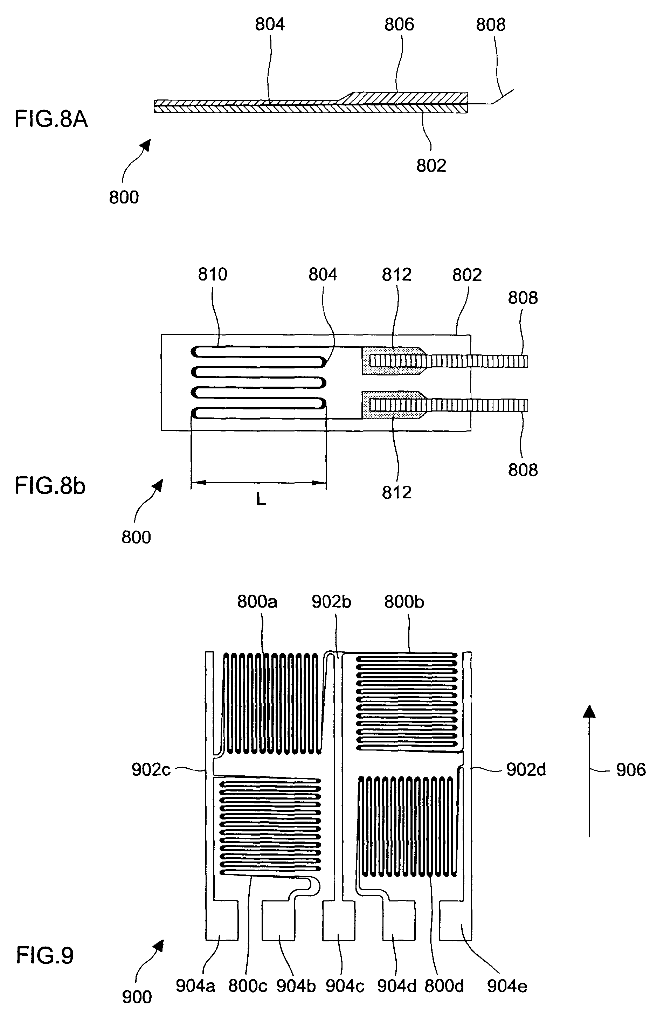

In Fig. 8 ist ein Folien-DMS gemäß dem Stand der Technik dargestellt, der in seiner Gesamtheit mit dem Bezugszeichen 800 bezeichnet ist. In Fig. 8a ist eine Querschnittsdarstellung des Folien-DMS gezeigt, der eine Trägerfolie 802 umfaßt, auf der eine Metallfolie 804 angeordnet ist. Auf der Metallfolie 804 ist eine Abdeckfolie 806 angeordnet. Mit 808 ist ein Anschlußdraht des Folien-DMS bezeichnet.

Wie in Fig. 8b zu erkennen ist, ist die Metallfolie 804 derart strukturiert, um eine mäanderförmige Struktur 810 zu haben. Eine solche Struktur wird auch als Meßgitter bezeichnet. Ferner sind in der Metallfolie 804 entsprechende Bereiche 812 vorgesehen, um die Anschlußdrähte 808 wirksam mit der Folienstruktur 804 zu verbinden. Durch die Metallfolie und deren Strukturierung sind komplizierte Strukturen und sehr kleine Abmessungen unterhalb eines Millimeters realisierbar. Typische Abmessungen eines Folien-DMS liegen im Bereich zwischen $3 \times 5$ mm² und $10 \times 200$ mm².

In Fig. 9 ist ein Dehnungsmeßstreifenelement 900 dargestellt, welches aus vier, mit einem Winkel von 90° zueinander orientierten Meßgittern 800a, 800b, 800c und 800d gebildet ist. Über entsprechende Leiterstrukturen 902a, 902b und 902c sind die verschiedenen Meßgitter mit Anschlußkontakten 904a, 904b, 904c, 904d und 904e verbunden.

Durch den Pfeil 906 ist in Fig. 9 eine Dehnungsrichtung dargestellt. Bei einer Dehnung der in der Vorrichtung 900 in die durch den Pfeil 906 gekennzeichneten Richtung ist die Widerstandsänderung der Meßgitter 800a und 800d positiv, die der Meßgitter 800b und 800c negativ.

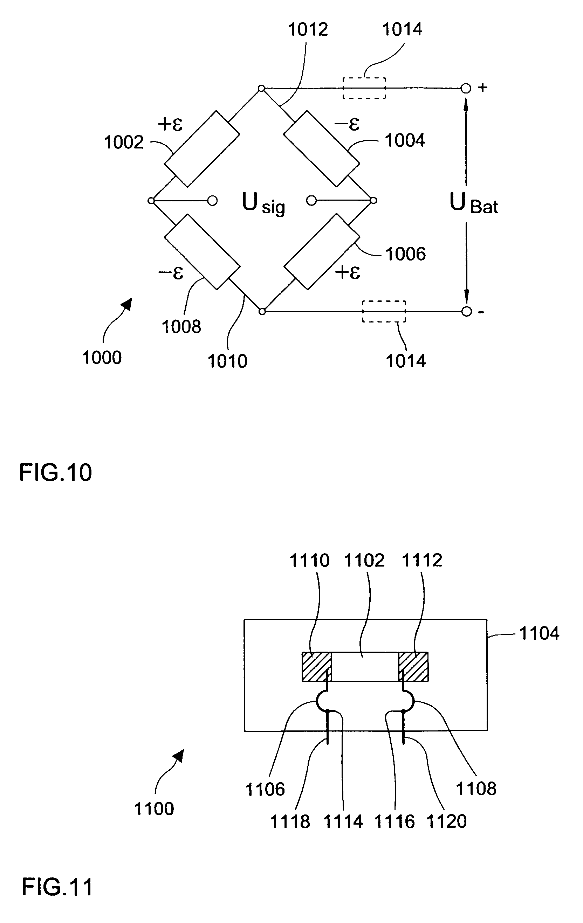

In Fig. 10 ist eine typische Vollbrücke gemäß dem Stand der Technik dargestellt, die in ihrer Gesamtheit mit dem Bezugszeichen 1000 versehen ist. Die Vollbrücke 1000 umfaßt vier aktive Dehnungsmeßstreifen 1002, 1004, 1006 und 1008, wobei die Elemente 1004 und 1006 in einem ersten Brückenzweig 1010, und die Elemente 1002 und 1008 in einem zweiten Brückenzweig 1012 angeordnet sind. Die Brücke wird mit einer Betriebsspannung $U_{bat}$ beaufschlagt, und ein Meßsignal $U_{sig}$ wird abgegriffen. Optional kann zwischen den Anschlüssen zum Anlegen einer Versorgungsspannung und den zwei Brückenzweigen jeweils ein Temperaturkompensationswiderstand 1014 angeordnet sein. Durch die den jeweiligen DMS-Elemente 1002 bis 1008 zugeordneten Bezeichnungen $+\varepsilon$ bzw. $-\varepsilon$ ist dargestellt, auf welche Art und Weise die jeweiligen Widerstände durch eine Dehnung beeinflußt werden. Gemäß der Vollbrückenschaltung mit vier aktiven Dehnungsmeßstreifen werden sämtliche Widerstände in der Brücke durch die Dehnung beeinflußt, im Gegensatz zu solchen Vollbrückenanordnungen, bei denen nur eines oder zwei Meßgitter gedehnt werden. Die in Fig. 10 gezeigte Schaltung wird am häufigsten im Sensorbau eingesetzt, da sie bei einer gegebenen Betriebsspannung der Brücke $U_{bat}$ die größte Signalspannung $U_{sig}$ bei einer bestimmten Dehnung ergibt, und zusätzlich eine teilweise Temperaturkompensation ermöglicht.

Die anhand der Fig. 6 bis 10 beschriebenen Dehnungsmeßstreifen haben jedoch die nachfolgend dargelegten Nachteile.

Zum einen sind bei Metall-Dehnungsmeßstreifen die verwendeten Metalle nicht ermüdungsfrei, so daß nach $10^5$ bis $10^7$ Bewegungszyklen ein Nullpunktfehler auftreten wird, der typischerweise einer Dehnung von 60 ppm entspricht.

Ein weitere Nachteil besteht darin, daß sich die thermischen Expansionskoeffizienten (TKE) der Dehnungsmeßstreifen und des Federkörpers, auf dem derselbe befestigt ist, in der Regel unterschiedlich sind. Bei einer Temperaturänderung resultiert dies in einer scheinbaren Dehnung bzw. Stauchung. Bei Metallen liegt der thermische Expansionskoeffizient im Bereich von 1 bis 30 ppm/K, bei Keramiken und Gläsern gilt: TKE = 1 bis 10 ppm/K und bei Kunststoffen ist TKE = 10 - 300 ppm/K. Um die Nachteile der unterschiedlichen thermischen Expansionskoeffizienten auszuräumen, lassen sich für gewisse Metalle, wie z. B. Stähle mit TKE = 11 ppm/K oder Aluminium mit TKE = 23 ppm/K Widerstandsschichten finden, die ungefähr den gleichen thermischen Expansionskoeffizienten besitzen, so daß in diesen Fällen der Effekt der scheinbaren Dehnung bzw. Stauchung minimiert ist. Für so wichtige Konstruktionswerkstoffe wie Keramiken und Kunststoffe ist dies jedoch nicht möglich.

Ein weitergehender Nachteil der oben beschriebenen Dehnungsmeßstreifen besteht darin, daß der Elastizitätsmodul der meisten als Federkörper verwendeten Materialien von der Temperatur abhängig ist. Hierdurch wird der Skalenfaktor bei einer Kraftmessung verfälscht. Dieser Fehlereffekt beträgt bei Stahl z. B. $3 \times 10^{-4}$/K, bei Aluminium $7 \times 10^{-4}$/K. Eine Kompensation der Temperaturabhängigkeit des Elastizitätsmoduls ist beispielsweise durch temperaturabhängige Serienwiderstände (siehe Fig. 10, Bezugszeichen 1014) möglich, jedoch müssen die einzelnen Widerstände in der Regel individuell getrimmt werden. Diese Art der Kompensation ist mühsam und nur für eine stark eingeschränkte Materialauswahl möglich.

Ein weiterer Nachteil der bekannten Dehnungsmeßstreifen besteht in den unterschiedlichen Temperaturkoeffizienten der Brücken-Widerstände und/oder der Verstimmung der Brücke aufgrund der unterschiedlichen Temperaturen der einzelnen Meßgitter. Hierdurch entsteht eine temperaturabhängige Fehlerspannung $\Delta U_{sig}$, auch als thermischer Offset (TKO) bezeichnet. Eine Kompensation des TKO ist z. B. mit einem in die Brücke eingefügten temperaturabhängigen Widerstand $R_T$ (siehe Fig. 6) möglich, dessen Wert in der Regel jedoch individuell eingestellt werden muß, z. B. durch partielles, lokales Abtragen einer Widerstandsschicht. Dies ist ein aufwendiges Verfahren, das für viele Anwendungen von Dehnungsmeßstreifen, z. B. aufgrund deren Unzugänglichkeit oder den zu kleinen Abmessungen, nicht möglich ist.

Ein weiterer Nachteil der oben beschriebenen, aus dem Stand der Technik bekannten Dehnungsmeßstreifen besteht darin, daß das Meßsignal selbst sehr klein ist, es liegt im Größenbereich von $10^{-8}$ bis $10^{-2}$ der Brückenbetriebsspannung $U_{bat}$. Da sich die Auswertungselektronik beabstandet von den Dehnungsmeßstreifen befindet, ist ein solches System zusätzlich anfällig gegen elektromagnetische Störsignale.

Im Stand der Technik sind ferner Halbleiter-Dehnungsmeßstreifen bekannt, die in der Regel aus einem dotierten Silizium-Einkristall in einer bestimmten Orientierung als dünne Streifen herausgeschnitten sind. In Fig. 11 ist ein Halbleiter-DMS-Element gezeigt, das in seiner Gesamtheit mit dem Bezugszeichen 1100 bezeichnet ist. Ein Silizium-DMS 1102 ist in eine Folie 1104 eingebettet, und über Bonddrähte 1106 und 1108 sind Anschlußflächen 1110 und 1112 des Silizium-DMS 1102 mit Anschlußflächen 1114 und 1116 des Elements 1100 verbunden, die ihrerseits mit Anschlußdrähten 1118 und 1120 verbunden sind. Typische Abmessungen von Silizium-Dehnungsmeßstreifen sind: Dicke 0,05 bis 0,15 mm, Breite: 0,2 bis 0,6 mm, Länge: 1 bis 6 mm.

Gegenüber Metallen haben Halbleiter-Dehnungsmeßstreifen den Vorteil, das diese einen wesentlich höheren K-Wert aufweisen, der von der Dotierung abhängt und im Bereich von K = -150 bis +150 liegt. Bei p-dotiertem Silizium ist K positiv, und bei n-dotiertem Silizium ist K negativ. Ein weiterer Vorteil besteht darin, daß Halbleiter-Dehnungsmeßstreifen ermüdungsfrei sind und, wie es für gewisse Anwendungen von Bedeutung ist, kleinere Abmessungen aufweisen.

Ein Nachteil von Dehnungsmeßstreifen auf der Grundlage von Halbleitermaterialien besteht in deren schlechter Linearität und in der Sprödigkeit von Silizium. Daher sind Silizium-Dehnungsmeßstreifen nur bis Dehnungen von $\varepsilon < 0{,}5\%$ einsetzbar.

Ferner weisen Halbleiter-Dehnungsmeßstreifen auch die oben beschriebenen Nachteile von Metall-Dehnungsmeßstreifen bezüglich der thermischen Expansionskoeffizienten, des Elastizitätsmoduls und der Verstimmung der Meßbrücken auf.

Neben der Verwendung von Halbleiter-Dehnungsmeßstreifen ist auch der Einsatz von in einer Scheibe eines Silizium-Einkristalls eindiffundierten oder implantierten piezoresistiven Widerstandsbahnen bekannt, wobei derartige Widerstände in einem gemeinsamen Siliziumsubstrat eingebracht sind, und z. B. zu einer Vollbrücke verschaltet werden. Eine solche Anordnung findet Einsatz bei Drucksensoren, bei denen die Dehnung einer Membran in Folge einer Druckbelastung durch piezoresistive Widerstandsbahnen gemessen wird (siehe z. B. H. Sandmaier und K. Kühl, "Piezoresistive Pressure Sensor with High Sensitivity and Accuracy", Sensors and Actuators, A21-23 (1990), Seiten 142-145).

Die DE 196 22 418 A1 zeigt einen Halbleitersensor mit einem Membranbereich 38, in dem die piezoelektrischen Beschleunigungserfassungselemente angeordnet sind. Eine Signalverarbeitungsschaltung ist auf einem Bereich des Chips angeordnet, welcher keiner Verformung unterworfen ist.

Die GB 1223810 A betrifft ein Halbleiterspannungsmeßgerät, z.B. in Form einer Lastzelle, die zwei Siliziumlastsäulen aufweist, die zwischen einer Grundplatte und einer Lastverteilungsplatte angeordnet sind. Die Meßelemente sind in den Siliziumlastsäulen integriert angeordnet, und ferner sind zwei monolithisch integrierte Schaltungen für zwei Wien-Brückenoszillatoren auf einer Oberfläche der Säulen integriert gebildet.

Ausgehend von diesem Stand der Technik liegt der vorliegenden Erfindung die Aufgabe zugrunde, eine Vorrichtung zur Erfassung einer Dehnung und/oder einer Stauchung eines Körpers zu schaffen, die ein hohes Ausgangssignal bei hoher Störsicherheit erzeugt, wobei die oben beschriebenen Nachteile vermieden werden.

Diese Aufgabe wird durch eine Vorrichtung gemäß dem Anspruch 1 gelöst.

Gemäß einem bevorzugten Ausführungsbeispiel betrifft die vorliegende Erfindung einen Silizium-Dehnungsmeßstreifen mit einer integrierten Auswertungselektronik, was den Vorteil hat, daß die relativ niedrigen Ausgangssignale der üblicherweise verwendeten Brückenschaltung ohne größere Umwege direkt der Auswertungselektronik zugeführt werden, wodurch sich eine erhöhte Störsicherheit ergibt, und die Ausgangssignale des Silizium-Dehnungsmeßstreifens einen ausreichend hohen Pegel aufweisen.

Gemäß einem weiteren bevorzugten Ausführungsbeispiel der vorliegenden Erfindung weist der Dehnungsmeßstreifen ferner einen Temperatursensor auf, der auf dem Halbleitersubstrat angeordnet ist, um eine Kompensation von Temperatureinflüssen zu ermöglichen.

Wiederum gemäß einem weiteren bevorzugten Ausführungsbeispiel sind die piezoresitiven Widerstandselemente, die Auswertungseinrichtung und der Temperatursensor auf einem gedünnten Siliziumsubstrat monolithisch integriert, wobei die einzelnen Schaltungselemente angeordnet sind, bevorzugterweise in gleicher Orientierung zur Richtung einer Dehnung oder Stauchung, um Einflüsse der Dehnung oder Stauchung auf die einzelnen Schaltungselemente zu kompensieren.

Weitere bevorzugte Ausführungsbeispiele der vorliegenden Erfindung sind in den Unteransprüchen definiert.

Nachfolgend werden anhand der beiliegenden Zeichnungen bevorzugte Ausführungsbeispiele der vorliegenden Erfindung näher beschrieben. Es zeigen:

Fig. 1    eine Draufsichtdarstellung einer Vorrichtung gemäß einem ersten Ausführungsbeispiel der vorliegenden Erfindung;

Fig. 2    eine Draufsichtdarstellung einer Vorrichtung gemäß einem zweiten Ausführungsbeispiel der vorliegenden Erfindung;

Fig. 3    eine seitliche Querschnittdarstellung der Vorrichtung aus Fig. 2;

Fig. 4a    eine seitliche Querschnittdarstellung einer Vorrichtung gemäß einem dritten Ausführungsbeispiel der vorliegenden Erfindung;

Fig. 4b    eine seitliche Querschnittdarstellung einer Vorrichtung gemäß einem vierten Ausführungsbeispiel der vorliegenden Erfindung;

Fig. 4c    eine Draufsichtdarstellung der Vorrichtung aus Fig. 4b;

Fig. 5    ein Blockdiagramm der Auswertungseinrichtung gemäß einem Ausführungsbeispiel der vorliegenden Erfindung;

Fig. 6a und 6b      eine Brückenschaltung mit vier Dehnungsmeßstreifen und einer Temperaturkompensationsschaltung gemäß dem Stand der Technik;

Fig. 7      einen Draht-Dehnungsmeßstreifen gemäß dem Stand der Technik;

Fig. 8      einen Folien-Dehnungsmeßstreifen gemäß dem Stand der Technik;

Fig. 9      einen Folien-Dehnungsmeßstreifen mit vier Meßgittern gemäß dem Stand der Technik;

Fig. 10      ein Schaltbild einer Vollbrückenschaltung mit vier Dehnungsmeßstreifen gemäß dem Stand der Technik; und

Fig. 11      einen Halbleiter-Dehnungsmeßstreifen gemäß dem Stand der Technik.

In der nachfolgenden Beschreibung der bevorzugten Ausführungsbeispiele der vorliegenden Erfindung werden in den Zeichnungen für gleiche Elemente auch die gleichen Bezugszeichen verwendet.

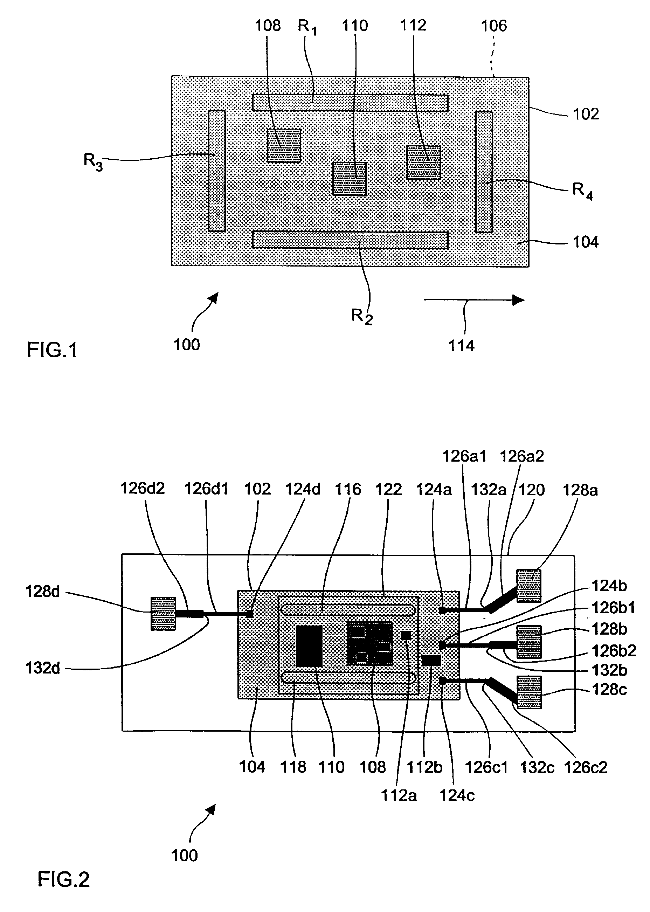

Bezugnehmend auf Fig. 1 wird nachfolgend ein erstes Ausführungsbeispiel der vorliegenden Erfindung näher beschrieben.

Die erfindungsgemäße Vorrichtung ist in Fig. 1 mit dem Bezugszeichen 100 bezeichnet und umfaßt im allgemeinsten Fall ein verformbares Halbleitersubstrat 102 mit einer ersten Hauptoberfläche 104 und einer zweiten Hauptoberfläche 106. Auf der ersten Hauptoberfläche 104 des Halbleitersubstrats 102 sind vier Elemente $R_1$, $R_2$, $R_3$ und $R_4$ angeordnet, die zumindest eine physikalische Eigenschaft aufweisen, die sich abhängig von einer Dehnung und/oder Stauchung des Halbleitersubstrats ändert, wobei das Halbleitersubstrat 102 auf einen Körper aufbringbar ist, dessen Dehnung und/oder Stauchung zu erfassen ist, und aufgrund seiner verformbaren Eigenschaft eine entsprechende Dehnung und/oder Stauchung des Körpers nachvollzieht.

Neben den Elemente $R_1$ bis $R_4$ sind verschiedene Schaltungselemente 108, 110 und 112 einer Auswertungseinrichtung auf der ersten Hauptoberfläche 104 des Halbleitersubstrats 102 angeordnet, wobei die Schaltungselemente 108 bis 112 derart mit den Elementen $R_1$ bis $R_4$ verbunden sind, um ein von der Dehnung und/oder Stauchung abhängiges Meßsignal zu erzeugen. In Fig. 1 ist durch den Pfeil 114 die Richtung einer Dehnung des Substrats 102 angezeigt.

Gemäß einem bevorzugten Ausführungsbeispiel sind die Elemente $R_1$ bis $R_4$ piezoresistive Widerstände, und die Schaltungselemente 108 und 112 sind Verstärkereinrichtungen. Optional kann das Schaltungselement 110 durch einen Temperatursensor gebildet sein, der mit den verbleibenden Schaltungselementen verbunden ist, um ein temperaturkompensiertes Meßsignal zu erzeugen.

Bevorzugterweise ist das Halbleitersubstrat ein Silizium-Einkristall mit einer Dicke von 5 bis 100 $\mu$m, in dem sich zusätzlich zu dem einen oder den mehreren piezoresistiven Widerständen, die als Widerstandsbahnen ausgebildet sein können, mindestens der eine Temperatursensor 110 und die Auswertungsschaltung 108, 112 befindet, die beispielsweise einen Brückenverstärker 108 und Schaltungselemente 112 zur Temperaturkompensation des Brücken-Offsets und des Skalenfaktors umfaßt. Durch die Integration dieser Schaltungselemente erhält man eine hohe Störsicherheit aufgrund des hohen Ausgangssignals, das typischerweise bei einigen Volt liegt, und eine Kompensation der Temperatureffekte beim Offset und beim Skalenfaktor. Die Schaltungselemente 108, 112 und der Temperatursensor 110 sind mit den als Dehnungsmeßstreifen wirkenden Widerstandsbahnen $R_1$ bis $R_4$ monolithisch integriert.

Die erfindungsgemäßen Silizium-Dehnungsmeßstreifen haben gemäß einem weiteren bevorzugten Ausführungsbeispiel eine Dicke von z. B. nur 5 bis 10 $\mu$m, und eignen sich aufgrund ihrer hohen Flexibilität vor allem zum Anbringen auf stark gekrümmten Körpern bzw. Federkörpern.

Zur Realisierung des erfindungsgemäßen Dehnungsmeßstreifens mit integrierter Elektronik werden konventionelle Silizium-Scheiben (Wafer) mit einer Dicke von 0,5 bis 0,7 mm mit herkömmlichen Halbleitertechnologieverfahren prozessiert, und anschließend erfolgt das Dünnen der Wafer auf die endgültige Dicke, z. B. mit Hilfe eines Trägers, auf dem der zu dünnende Wafer befestigt ist. Das Dünnen erfolgt durch Schleifen, Ätzen, chemisch-mechanisches Polieren oder durch eine Kombination dieser herkömmlichen Verfahren.

Bei der in Fig. 1 dargestellten, erfindungsgemäßen Vorrichtung 100 sind die vier Brückenwiderstände $R_1$ bis $R_4$ derart angeordnet, daß bei einer Dehnung in Richtung des Pfeils 114, p-dotiertes Silizium für die Brückenwiderstände vorausgesetzt, die Widerstandswerte von $R_1$ und $R_2$ zunehmen, und die Widerstandswerte von $R_3$ und $R_4$ dagegen abnehmen. Es ist offensichtlich, daß anstelle des p-dotierten Siliziums auch n-dotiertes Silizium verwendet werden kann. Die elektronischen Schaltungselemente 108, 112 und der Temperatursensor 110 sind mit allgemein bekannten Verfahren, z. B. als pn-Übergang, realisiert und sind auf dem Dehnungsmeßstreifen-Chip mitintegriert. Bei der in Fig. 1 dargestellten Vorrichtung sind die vier aktiven Dehnungsmeßstreifen bzw. Elemente $R_1$ bis $R_4$ entsprechend der in Fig. 10 dargestellten Vollbrückenschaltung angeordnet. Grundsätzlich ist, wie auch bei metallischen Folien-Dehnungsmeßstreifen eine weitgehend beliebige Anordnung und Orientierung mehrerer Widerstandsbahnen möglich, die auch zu mehreren Brückenschaltungen zusammengefaßt sein können.

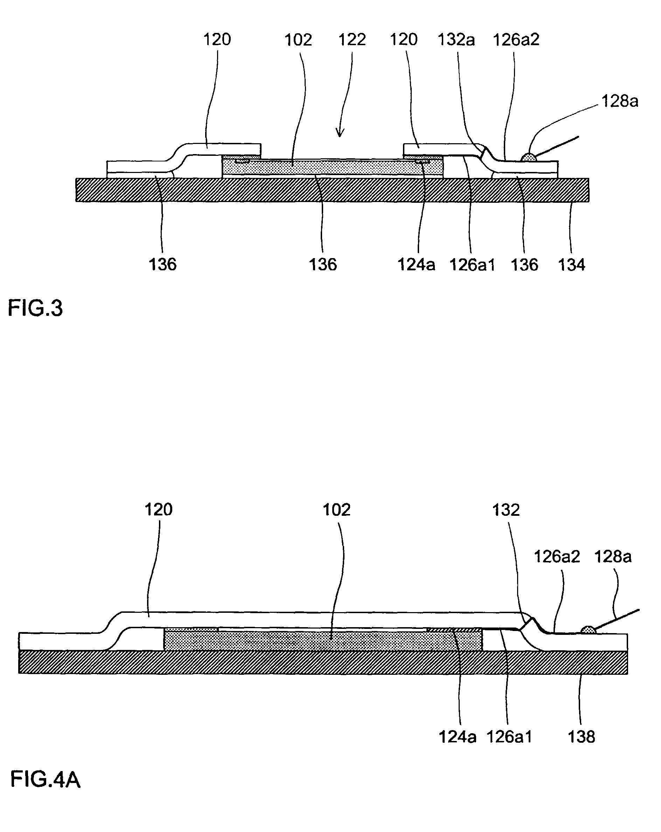

Anhand der Fig. 2 und 3 wird nachfolgend ein weiteres bevorzugtes Ausführungsbeispiel der vorliegenden Erfindung näher beschrieben. Die Einrichtung 100 umfaßt das gedünnte Siliziumsubstrat 102 sowie die Schaltungselemente 108 und 110, und die Schaltungselemente 112a und 112b. Entgegen dem Beispiel aus Fig. 1 sind entlang der Längskanten des Substrats 102 piezoresistive Widerstandsbahnen 116 und 118 ausgebildet. Um die erfindungsgemäße Vorrichtung zu schützen, ist eine isolierende Schicht 120 auf der Hauptoberfläche 104 des Substrats 102 angeordnet, die sich über die Abmessungen des Substrats 102 hinaus erstreckt. Bei dem in Fig. 2 dargestellten Ausführungsbeispiel weist die obere isolierende Folie 120 eine Ausnehmung 122 auf, die die Widerstandsbahnen 116 und 118 sowie die Schaltungselemente 108 bis 112a freilegt. Die von der Schicht 120 überdeckten Kanten des Substrats sind durch gestrichelte Linien angedeutet. Die isolierende Folie 120 kann z. B. durch ein Polyimid oder durch glasfaserverstärktes Phenolharz gebildet sein und isoliert bzw. schützt die erfindungsgemäße Dehnungsmeßstreifenanordnung. Zwischen der Trägerfolie 120 und dem Substrat 102 sind Kontaktierungen 124a, 124b und 124c gebildet, die über Leiterbahnen 126a1, 126a2, 126b1, 126b2, und 126c1, 126c2 mit Anschlußflächen 128a, 128b und 128c verbunden sind. Die Leiterbahnen 126a1, 126b1 und 126c1 sind auf der dem Substrat 102 zugewandten Oberfläche der Folie 120 gebildet und über Durchkontaktierungen 132a, 132b und 132c mit den Leiterbahnen 126a2, 126b2 und 126c2 auf der vom Substrat 102 abgewandten Oberfläche der Folie 120 verbunden. Die Leiterbahnen 126a1 bis 126c2 und die Anschlußflächen bzw. Anschlußpads 128a bis 128c können jedoch auch auf der dem Substrat 102 abgewandten Oberfläche der isolierenden Folie 120 angeordnet sein und entsprechend mit den Kontaktierungen 124a, 124b, 124c verbunden sein. Die Anschlußpads 128a bis 128c sind für die Anschlüsse von Drahtverbindungen zu weitergehenden Schaltungselementen vorgesehen.

Ferner kann, wie in Fig. 2 gezeigt ist, eine weitere Anschlußfläche 128d vorgesehen sein, die beispielsweise dazu dient, der Anordnung 100 die erforderliche Betriebsspannung zuzuführen. Die Anschlußfläche 128d ist - wie die übrigen Anschlußflächen - über Leiterbahnen 126d1 und 126d2 mit einer Kontaktierung 124d auf dem Substrat verbunden. Eine Kontaktierung verbindet die Leiterbahnen 126d1 und 126d2 miteinander.

Anstelle der in Fig. 2 verwendeten Folie 120 mit einer Ausnehmung 122 kann auch eine Folie ohne Ausnehmung verwendet werden, die die Oberfläche des Substrats 102 vollständig bedeckt.

In Fig. 3 ist eine seitliche Querschnittdarstellung der in Fig. 2 beschriebenen Anordnung dargestellt, wobei die bereits anhand der Fig. 2 beschriebenen Elemente nicht erneut beschrieben werden. Wie in Fig. 3 zu sehen ist, weist die Folie 120 auf deren dem Substrat 102 zugewandten Oberfläche die Kontaktierung 124a berührend die Leiterbahn 126a1 auf, die mit der Anschlußfläche 124a auf dem Substrat 102 verbunden ist, um so die Ausgabe der erfaßten Meßsignale über das Anschlußpad 128a zu ermöglichen. Zusätzlich ist dargestellt, wie die Vorrichtung 100 auf einem Körper 134 angeordnet ist, dessen Dehnung bzw. Stauchung zu erfassen ist. Wie in Fig. 3 gezeigt ist, erfolgt die Befestigung der Vorrichtung 100 auf dem Körper 134 über eine geeignete Zwischenschicht 136, z.B. eine Klebeschicht, die eine feste Verbindung mit dem Körper 134 sicherstellt.

Gemäß der vorliegenden Erfindung erfolgt die Kontaktierung über die Anschlußfläche 124a bis 124d des Substrats 102 über die Durchkontaktierungen 132a bis 132d mit den Leiterbahnen 126a2 bis 126d2 auf der Oberseite der Folie 120 durch Bonden, Lötung oder durch leitfähigen Kleber.

In Fig. 4a ist ein drittes Ausführungsbeispiel dargestellt, bei dem schematisch das Substrat 102 gezeigt ist, wobei jedoch darauf hingewiesen wird, daß dasselbe auch die in Fig. 2 bereits beschriebenen Elemente aufweist. Ferner ist die Trägerfolie 120 als das Substrat vollständig bedeckend dargestellt, und zusätzlich zu der oberen Trägerfolie 120 ist eine untere Trägerfolie 138 vorgesehen, um die Unterseite des gegen Kratzer empfindlichen Substrats 102 zu schützen.

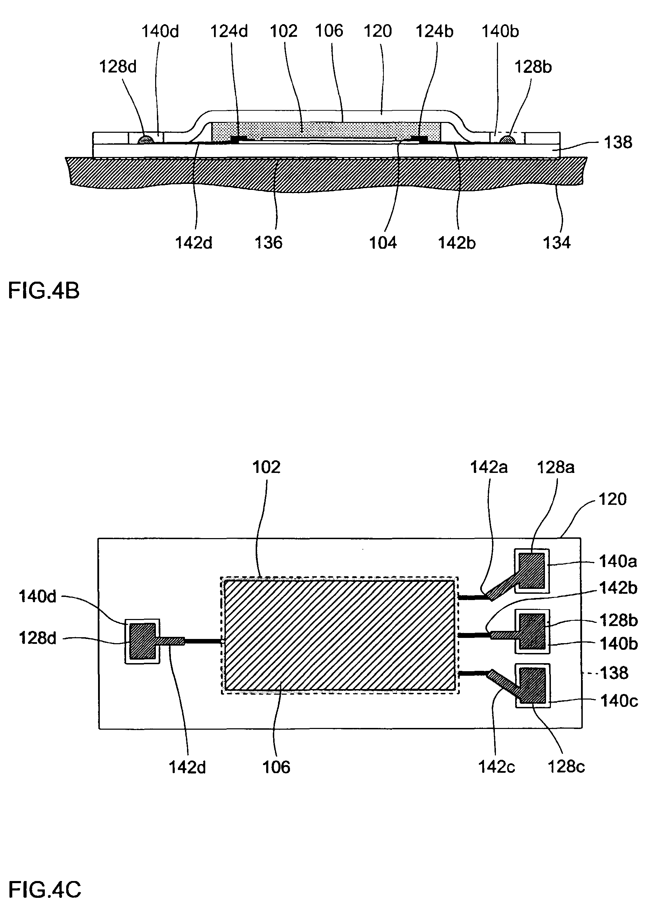

Anstelle der anhand der Fig. 2 bis 4a beschriebenen Anordnung des Substrats, bei dem die Hauptoberfläche 104, auf der die Schaltungselemente und die Widerstandsbahnen angeordnet sind, benachbart zu der oberen Trägerfolie angeordnet sind, kann das Substrat auch derart angeordnet sein, daß die Hauptoberfläche mit den Schaltungselementen und den Widerstandsbahnen benachbart zu einer Oberfläche der unteren Trägerfolie angeordnet sind, wie dies in Fig. 4b gezeigt ist. Die Oberfläche 104 mit den Kontakten bzw. Anschlußflächen 124a bis 124d gezeigt sind nur 124b und 124d) ist benachbart zu der unteren Trägerfolie 138 angeordnet. Aus der unteren Trägerfolie 138 sind die Anschlußpads 128a bis 128d (gezeigt sind nur 128b und 128d) gebildet, die durch eine Öffnung 140a bis 140d (gezeigt sind nur 140b, 140d) in der ersten oder oberen Folie 120 freigelegt sind. Die beiden Folien 120, 138 sind miteinander verbunden, wie dies in Fig. 4b gezeigt ist. Die Kontakte 124a bis 124d des Substrats 102 sind über Leiterbahnen 142a bis 142d (gezeigt sind nur 124b und 124d) auf der unteren Folie 138 mit den Anschlußpads 128a bis 128d verbunden. Die entsprechende Kontaktierung erfolgt, wie oben beschrieben, auf die Oberseite der unteren Trägerfolie, also die der Hauptoberfläche 104 abgewandten Oberfläche der Trägerfolie, also in der sogenannten Flip-Chip-Technik.

In Fig. 4c ist eine Draufsicht der Vorrichtung dargestellt, wie sie anhand der Fig. 4b beschrieben wurde. In dieser Darstellung sind alle in Fig. 4c nur teilweise zu sehenden Elemente gezeigt. Schematisch ist sowohl die obere Folie 120 als auch die auf der unteren Folie angeordneten Leiterbahnen 142a bis 142d gezeigt - ebenso wie der Bereich, in dem das Substrat 102 angeordnet ist.

Gemäß einem weiteren bevorzugten Ausführungsbeispiel weist die erfindungsgemäße Vorrichtung auf der zweiten Hauptoberfläche 106 des Substrats eine Schicht auf, die beispielsweise die in Fig. 3 dargestellte Schicht 136 sein kann, wobei diese Schicht derart ausgebildet ist, daß dieselbe eine Zug- oder Druckspannung ausübt. Da dünne, prozessierte Siliziumschichten infolge interner mechanischer Spannungen auf der prozessierten Oberfläche dazu neigen, sich aufzurollen, ist die Schicht vorgesehen, um diesen Effekt zu kompensieren, wodurch sich die Handhabung und Montage erheblich vereinfacht. Durch eine geeignete Wahl der Schichtdicke bzw. der Nachbehandlung, z. B. Temperung, wird der Streß auf der Oberseite durch einen gleich großen Streß auf der Unterseite kompensiert. Als Materialien für die spannungskompensierende Schicht kommen z. B. Siliziumdioxid ($SiO_2$), Siliziumnitrid ($Si_3N_4$) oder Siliziumkarbid (SiC) in Frage.

Nachdem die Schaltungselemente zusammen mit den piezoresistiven Widerstandsbahnen auf dem gedünnten Siliziumsubstrat gebildet sind, werden auch die passiven Bauelemente, wie z. B. Widerstände, und auch die aktiven Bauelemente, wie z. B. Dioden und Transistoren, die in den Schaltungselementen enthalten sind, in ihren Eigenschaften in gewisser Art durch eine Dehnung und/oder Stauchung beeinflußt. So ändern sich bei Widerständen beispielsweise deren Widerstandswert wegen des erwähnten piezoresistiven Effekts, bei Transistoren die Stromverstärkung (Bipolartransistoren), bzw. die Steilheit (Feldeffekt-Transistoren). Letzteres ist bedingt durch den Einfluß von Dehnung/Stauchung auf die Ladungsträgerbeweglichkeit. Gemäß einem Aspekt der vorliegenden Erfindung wird diese Beeinflussung der aktiven und passiven Schaltungselemente in der Auswertungseinrichtung der erfindungsgemäßen Vorrichtung dadurch kompensiert, daß Widerstandspaare oder -ketten, die Spannungsteiler bilden oder kritische Spannungen bzw. Spannungsdifferenzen definieren, in gleicher Orientierung bezüglich der Dehnungsrichtung angeordnet werden, so daß ihr Widerstandswert in gleicher Weise durch die Dehnung bzw. Stauchung beeinflußt wird. Bei dem in Fig. 1 dargestellten Beispiel sind die Widerstandsbahnen $R_1$ und $R_2$ in diesem Sinne in gleicher Orientierung angeordnet. Sinngemäß werden ebenso kritische, aktive Bauelementpaare in gleicher Orientierung angeordnet, wie z. B. die beiden Transistoren eines Differenzverstärkers.

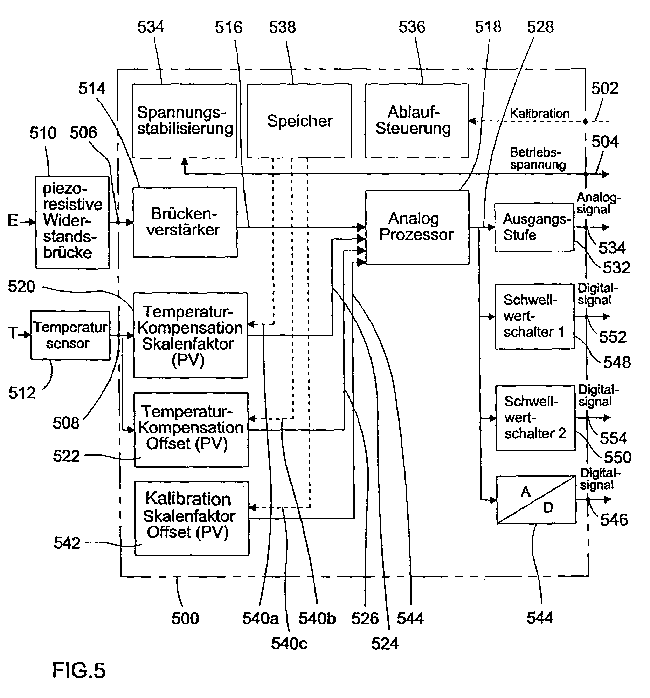

Anhand der Fig. 5 wird nachfolgend ein bevorzugtes Ausführungsbeispiel einer Auswertungseinrichtung, wie sie bei der vorliegenden Erfindung verwendet wird, beschrieben. In Fig. 5 ist die erfindungsgemäße Auswertungseinrichtung in ihrer Gesamtheit mit dem Bezugszeichen 500 versehen, die an einem ersten Eingang 502 ein Kalibrierungssignal, und an einem zweiten Eingang 504 ein Betriebsspannungssignal empfängt. Die Einrichtung 500 umfaßt ferner zwei weitere Eingänge 506 und 508. Am Eingang 506 wird von einer piezoresistiven Widerstandsbrücke 510, die ihrerseits einer Dehnung/Stauchung $\varepsilon$ ausgesetzt ist, ein Brückensignal empfangen, und am Eingang 508 wird von einem Temperatursensor 512, der auf eine Temperatur T reagiert, ein Temperatursignal empfangen. Das am Eingang 506 empfangene Brückenausgangssignal wird einem Brückenverstärker 514 zugeführt, dessen Ausgang über eine Leitung 516 mit einem ersten Eingangsanschluß eines analogen Prozessors 518 verbunden ist.

Das am Eingang 508 empfangene Temperatursignal wird von einer Einrichtung zur Kompensation der Temperatureinflüsse auf den Skalenfaktor 520 sowie von einer Einrichtung zur Kompensation von Temperatureinflüssen auf den Offset 522 empfangen, wobei diese Einrichtungen über Leitungen 524 und 526 mit weiteren Eingängen des Analogprozessors 518 verbunden sind.

Der Analogprozessor gibt auf seiner Ausgangsleitung 528 ein analoges Meßsignal aus, das bei einem weiteren Ausführungsbeispiel einer Ausgangsstufe 532 zugeführt wird, die als Ausgang der Einrichtung 500 auf Leitung 534 ein analoges Ausgangssignal liefert.

Gemäß einem weiteren bevorzugten Ausführungsbeispiel kann eine Spannungsstabilisierungseinrichtung 534 vorgesehen sein, die über den Eingang 504 das Betriebsspannungssignal empfängt, und einen stabilen Betrieb der Auswertungseinrichtung 500 gewährleistet.

Wiederum gemäß einem weiteren Ausführungsbeispiel ist eine Ablaufsteuerung 536 vorgesehen, die mit dem Eingang 502 verbunden ist, und das Kalibrierungssignal empfängt. Die Ablaufsteuerung 536 ist mit einem Speicher 538 verbunden, in dem eine Anzahl von vorbestimmten Kalibrierungswerten gespeichert sind, die abhängig von dem Kalibrierungssignal, welches über die Ablaufsteuerung 536 einen Speicher 538 angelegt wird, ausgewählt werden. Die ausgewählten Kalibrierungswerte aus dem Speicher 538 werden über die Leitungen 540a, 540b und 540c an die Kompensationseinrichtung 520 und 522 angelegt, um entsprechende Kompensationskoeffizienten in diesen Einrichtungen einzustellen, wobei diese Einrichtungen bei diesem Ausführungsbeispiel durch programmierbare Verstärker ausgebildet sind. Über die Leitung 540c wird ein Kalibrierungssignal an eine Kalibrierungseinrichtung 542 für den Skalenfaktor-Offset angelegt, die ebenfalls als programmierbarer Verstärker ausgebildet ist. Der programmierbare Verstärker 542 ist über eine Leitung 544 mit einem weiteren Eingang des Analogprozessors 518 verbunden.

Wiederum gemäß einem anderen Ausführungsbeispiel kann zusätzlich zu der Ausgangsstufe 532 oder anstelle der Ausgangsstufe 532 ein Analog/Digital-Wandler 544 vorgesehen sein, der das analoge Ausgangssignal auf Leitung 528 in ein digitales Ausgangssignal am Ausgang 546 der Einrichtung 500 umwandelt. Zusätzlich können ein erster Schwellwertschalter 548 und ein zweiter Schwellwertschalter 550 vorgesehen sein, um an den Ausgangsanschlüssen 542 und 554 der Auswertungseinrichtung ein digitales Signal auszugeben.

Das in Fig. 5 gezeigte Prinzipschaltbild einer besonders günstigen Ausführungsform der elektronischen Schaltungselemente ermöglicht die Kalibrierung des Skalenfaktors und des Offsets sowie die Temperaturkompensation beider Größen, wobei bevorzugterweise digital programmierbare Verstärker (PV) eingesetzt werden, und die erforderlichen Kalibrationsfaktoren in einem Speicher 538, wie z. B. einem EPROM, auf dem Substrat bzw. Chip gespeichert sind. Auf diese Art und Weise kann nach dem Einbau bzw. der Installation des erfindungsgemäßen Dehnungsmeßstreifens auf rein elektronischem Weg dessen Kalibrierung vorgenommen werden. Ferner ist in Fig. 10 dargestellt, daß ein Analog/Digital-Wandler auf dem Dehnungsmeßstreifen mit integrierter Elektronik integriert werden kann, so daß die Übertragung des erzeugten Meßsignals in Form eines besonders störunempfindlichen digitalen Signals ermöglicht wird.

Gemäß einer weiteren Ausgestaltung kann das Meßsignal auch quasidigital, in Form eines pulsweitenmodulierten oder Frequenzsignals übertragen werden.

Eine weitere vorteilhafte Ausgestaltung der erfindungsgemäßen Vorrichtung besteht darin, der Auswertungseinrichtung einen drahtlosen Hochfrequenz-Sende-Empfänger, einen sogenannten Transponder, zuzuordnen und diesen mit zu integrieren. Dadurch erfolgt die Energieversorgung des Dehnungsmeßstreifens und die Meßdatenübertragung drahtlos über den Transponder. In diesem Fall ist die erforderliche Antenne z. B. in der oberen oder der unteren Trägerfolie integriert.

**Patentansprüche**

1. Vorrichtung zum Erfassen einer Dehnung und/oder einer Stauchung eines Körpers (134), mit

   einem verformbaren Halbleitersubstrat (102) auf dem zumindest ein Element ($R_1$, $R_2$, $R_3$, $R_4$; 116, 118) angeordnet ist, das zumindest eine physikalische Eigenschaft hat, die sich abhängig von einer Dehnung und/oder Stauchung des Halbleitersubstrats (102) ändert; und

   einer Auswertungseinrichtung (108, 112; 500), die zusammen mit dem zumindest einen Element ($R_1$, $R_2$, $R_3$, $R_4$; 116, 118) auf dem Halbleitersubstrat (102) angeordnet ist und mit dem Element verbunden ist, um ein von der Dehnung und/oder Stauchung abhängiges Meßsignal zu erzeugen;

   wobei die Auswertungseinrichtung (108, 112; 500) derart auf dem Halbleitersubstrat (102) angeordnet ist, daß sie einer Dehnung und/oder Stauchung unterworfen ist;

   dadurch gekennzeichnet,

   daß das verformbare Halbleitersubstrat (102) auf dem Körper (134), dessen Dehnung und/oder Stauchung zu erfassen ist, aufbringbar ist; und

   daß Schaltungselemente der Auswertungseinrichtung (108, 112; 500) derart angeordnet sind, daß Einflüsse der Dehnung und/oder Stauchung auf die Funktion der Auswertungseinrichtung (108, 112; 500) minimal sind.

2. Vorrichtung nach Anspruch 1, bei der das zumindest eine Element ($R_1$, $R_2$, $R_3$, $R_4$; 116, 118) ein piezoresistiver Widerstand ist.

3. Vorrichtung nach Anspruch 1 oder 2, bei der die Auswertungseinrichtung (108, 112; 500) eine Verstärkereinrichtung umfaßt.

4. Vorrichtung nach einem der Ansprüche 1 bis 3, die ferner einen Temperatursensor (110; 512) umfaßt, der auf dem Halbleitersubstrat (102) angeordnet ist, wobei die Auswertungseinrichtung mit dem Temperatursensor verbunden ist, um ein temperaturkompensiertes Meßsignal zu erzeugen.

5. Vorrichtung nach einem der Ansprüche 1 bis 4, die eine Mehrzahl von Elementen umfaßt, die in einer Brückenschaltung verschaltet sind, wobei der Verstärker der Auswertungseinrichtung (108, 112; 500) ein Brückenverstärker ist.

6. Vorrichtung nach Anspruch 5, bei der zumindest vier piezoresistive Widerstandselemente ($R_1$, $R_2$, $R_3$, $R_4$) in zumindest einer Vollbrücke verschaltet sind.

7. Vorrichtung nach einem der Ansprüche 5 oder 6, bei der die Auswertungseinrichtung (500) ferner folgende Merkmale umfaßt:

   eine Signalverarbeitungseinrichtung (518) mit einer Mehrzahl von Signaleingängen und einem Signalausgang, an dem das Meßsignal anliegt;

   eine Einrichtung (520) zur Kompensation von Temperatureinflüssen auf den Brücken-Offset, die einen Eingang aufweist, der mit einem Ausgang des Temperatursensors (512) verbunden ist, und die einen Ausgang aufweist, der mit einem Eingang der Signalverarbeitungseinrichtung (518) verbunden ist; und

eine Einrichtung (522) zur Kompensation von Temperatureinflüssen auf den Skalenfaktor, die einen Eingang aufweist, der mit dem Ausgang des Temperatursensors (512) verbunden ist, und die einen Ausgang aufweist, der mit einem zweiten Eingang der Signalverarbeitungseinrichtung (518) verbunden ist;
wobei der Verstärker (514) einen Eingang aufweist, der mit einem Ausgang der piezoresistiven Widerstandsbrücke (510) verbunden ist, und einen Ausgang aufweist, der mit einem dritten Eingang der Signalverarbeitungseinrichtung (518) verbunden ist.

8. Vorrichtung nach Anspruch 7, bei der die Auswertungseinrichtung (500) folgende Merkmale umfaßt:

eine Kalibrierungseinrichtung mit einer Ablaufsteuerung (536), die ein Kalibrierungssignal empfängt, einer Speichereinrichtung (538), deren Eingang mit einem Ausgang der Ablaufsteuerung (536) verbunden ist, und die vorbestimmte Werte für die Kompensation von Temperatureinflüssen auf den Brücken-Offset und den Skalenfaktor sowie vorbestimmte Werte für die Kalibrierung des Skalenfaktors speichert, wobei abhängig von dem Kalibrierungssignal die vorbestimmten Werte aus der Speichereinrichtung (538) auswählbar sind, und einer Einrichtung (542) zum Kalibrieren des Skalenfaktors;
wobei die Einrichtungen (520, 522) zur Kompensation der Temperatureinflüsse auf den Brücken-Offset und den Skalenfaktor und die Einrichtung (542) zum Kalibrieren des Skalenfaktors durch programmierbare Verstärker gebildet sind, die durch die in der Speichereinrichtung (538) gespeicherten, vorbestimmten Werte ansteuerbar sind.

9. Vorrichtung nach Anspruch 7 oder 8, bei der die Auswertungseinrichtung eine Ausgangsstufe (534) und/oder einen Digital/Analog-Wandler (546) umfaßt, deren Eingänge mit dem Ausgang der Signalverarbeitungseinrichtung (518) verbunden sind, um das Meßsignal als analoges und/oder digitales Ausgangssignal auszugeben.

10. Vorrichtung nach einem der Ansprüche 1 bis 9, bei dem die Auswertungseinrichtung einen Transponder umfaßt, der eine Übertragung des Meßsignals an einen Empfänger und die Energieversorgung bewirkt.

11. Vorrichtung nach einem der Ansprüche 1 bis 10, bei dem die Auswertungseinrichtung (500) eine Einrichtung (534) zur Stabilisierung der Betriebsspannung umfaßt.

12. Vorrichtung nach einem der Ansprüche 1 bis 11, bei der die Schaltungselemente in gleicher Orientierung bezüglich der Dehnungs- und/oder Stauchungsrichtung (114) angeordnet sind.

13. Vorrichtung nach einem der Ansprüche 1 bis 12, bei der das Halbleitersubstrat (102) ein gedünntes Siliziumsubstrat ist, in dem das zumindest eine Element ($R_1$, $R_2$, $R_3$, $R_4$; 116, 118), die Auswertungseinrichtung (108, 112;500) und der Temperatursensor (512) monolithisch integriert sind.

14. Vorrichtung nach Anspruch 13, bei der das Siliziumsubstrat (102) eine Dicke von 5 bis 100 $\mu$m aufweist.

15. Vorrichtung nach Anspruch 14, bei der das Siliziumsubstrat (102) eine Dicke von 5 bis 10 $\mu$m aufweist.

16. Vorrichtung nach einem der Ansprüche 1 bis 15, die auf einer zweiten Hauptoberfläche (106) des Halbleitersubstrats (102), die der ersten Hauptoberfläche (104), auf der das zumindest eine Element und die Auswertungseinrichtung angeordnet sind, abgewandt ist, eine eine Zug- oder Druckspannung ausübende Schicht (136) aufweist, um interne mechanische Spannungen des Halbleitersubstrats (102) zu kompensieren.

17. Vorrichtung nach Anspruch 16, bei der die spannungskompensierende Schicht (136) aus $SiO_2$, $Si_3N_4$ oder SiC besteht.

18. Vorrichtung nach einem der Ansprüche 1 bis 17, bei der eine obere Trägerfolie (120) auf der ersten Hauptoberfläche (104) des Halbleitersubstrats (102) zumindest teilweise angeordnet ist.

19. Vorrichtung nach einem der Ansprüche 1 bis 18, bei der eine untere Trägerfolie (138) auf der zweiten Hauptoberfläche (106) des Halbleitersubstrats (102) angeordnet ist.

20. Vorrichtung nach Anspruch 18 oder 19, bei der die untere und/ obere Trägerfolie mit Anschlußflächen (128a - 128c) versehen ist, die mit der Auswertungseinrichtung verbunden sind.

21. Vorrichtung nach einem der Ansprüche 13 bis 20, bei der das Siliziumsubstrat (102) nach der Integration des zumindest einen Elements, der Auswertungseinrichtung und des Temperatursensors durch Schleifen, Ätzen und/oder chemisch-mechanisches Polieren gedünnt wird.

FIG.1

FIG.2

FIG.3

FIG.4A

140d 124d 102 106 120 124b 140b

128d 128b

138

142d 136 104 142b 134

FIG.4B

102 142a 128a

120

140a

142b

140d 128b

128d 140b

138

140c

142d 106 142c 128c

FIG.4C

FIG.5

FIG.6A

FIG.6B

FIG.7

FIG.8A

804    806    808

802

800

FIG.8b

810    804    812    802

808

L

812

808

800

FIG.9

800a    902b    800b

906

902c

902d

900    904a  800c  904b  904c  904d  800d  904e

FIG.10

FIG.11

| Europäisches Patentamt | **EUROPÄISCHER RECHERCHENBERICHT** | Nummer der Anmeldung<br>EP 99 11 0288 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | GB 1 236 385 A (THE PLESSEY CO. LTD.) 23. Juni 1971 (1971-06-23) * Seite 1, Zeile 47 - Zeile 67 * | 1,3 | G01P15/12 G01L1/22 G01D3/02 G01D3/036 |
| A | --- | 14,15 | |
| X | EP 0 677 725 A (SSI TECHNOLOGIES INC) 18. Oktober 1995 (1995-10-18) * das ganze Dokument * | 1-4,13 | |
| Y | | 5,6 | |
| A | --- | 7 | |
| X | WO 96 08701 A (IBM ;GIMZEWSKI JAMES KAZIMIERZ (CH); SCHLITTLER RAETO RUDOLF (CH);) 21. März 1996 (1996-03-21) * Seite 3, Zeile 29 - Seite 6, Zeile 7; Abbildung 1 * | 1-3 | |
| Y | --- US 5 048 343 A (OBOODI MOHAMMADREZA ET AL) 17. September 1991 (1991-09-17) * das ganze Dokument * | 5,6 | |
| A | ----- | 7 | **RECHERCHIERTE SACHGEBIETE (Int.Cl.6)**<br>G01P<br>G01L<br>G01B |

Der vorliegende Recherchenbericht wurde für alle Patentansprüche erstellt

| Recherchenort | Abschlußdatum der Recherche | Prüfer |
|---|---|---|
| DEN HAAG | 14. September 1999 | Chapple, I |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

...........................................................

& : Mitglied der gleichen Patentfamilie,übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 99 11 0288

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-09-1999

| Im Recherchenbericht angeführtes Patentdokument | Datum der Veröffentlichung | Mitglied(er) der Patentfamilie | Datum der Veröffentlichung |
|---|---|---|---|
| GB 1236385 A | 23-06-1971 | KEINE | |
| EP 0677725 A | 18-10-1995 | US 5507171 A | 16-04-1996 |
| | | CA 2145698 A | 16-10-1995 |
| | | JP 7311100 A | 28-11-1996 |
| WO 9608701 A | 21-03-1996 | EP 0783670 A | 16-07-1997 |
| | | JP 10508431 T | 18-08-1998 |
| | | US 5780727 A | 14-07-1998 |
| US 5048343 A | 17-09-1991 | KEINE | |

EPO FORM P0461

Für nähere Einzelheiten zu diesem Anhang : siehe Amtsblatt des Europäischen Patentamts,Nr.12/82